# EUROPÄISCHE PATENTANMELDUNG

(11) **EP 2 463 701 A1**
(43) Veröffentlichungstag der Anmeldung: **13.06.2012**
(21) Anmeldenummer: 12000916.2
(22) Anmeldetag: 20.10.2006
(51) Int. Cl.: G02B 21/22

(54) **Mikroskopiesystem**

(30) Priorität: 20.10.2005 DE 102005050345; 17.03.2006 DE 102006012388
(62) Teilanmeldung aus: 06806441.9
(71) Anmelder: Carl Zeiss Meditec AG, 07745 Jena (DE)
(72) Erfinder: Fritz, Strähle, 73540 Heubach (DE); Hauger, Christoph, 73431 Aalen (DE)
(74) Vertreter: Diehl & Partner GbR

(57) **Zusammenfassung**

Die vorliegende Erfindung betrifft ein Mikroskopiesystem zur Abbildung eines in einer Objektebene (1) des Mikroskopiesystems anordenbaren Objekts, wobei das Mikroskopiesystem ein Abbildungssystem (26) mit mehreren optischen Elementen zur Bereitstellung wenigstens eines Paars von Abbildungsstrahlengängen (2a, 2b, 2c, 2d), welche in der Objektebene (1) einen Stereowinkel (a1) einschließen, umfaßt. Dabei weist das Abbildungssystem (26) ein erstes Teilsystem (T1) auf, das eine Mehrzahl von optischen Linsen (4-8, 11, 13, 14) umfaßt, welche von beiden Abbildungsstrahlengängen (2a, 2b, 2c, 2d) des wenigstens einen Paars von Abbildungsstrahlengängen (2a-2d) gemeinsam durchsetzt sind. Weiter weist das Abbildungssystem (26) ein zweites Teilsystem (T2) auf, das eine Mehrzahl von optischen Linsen (16'-21', 16"-21", 16"'-21"', 16""-21"") umfaßt, welche jeweils von lediglich einem Abbildungsstrahlengang (2a, 2b, 2c, 2d) des wenigstens einen Paars von Abbildungsstrahlengängen (2a, 2b, 2c, 2d) durchsetzt sind. Dabei sind wenigstens zwei Linsen (4, 5, 6) des ersten Teilsystems (T1) und wenigstens zwei Linsen (16'-19', 16"-19", 16"'-19"', 16""-19"") des zweiten Teilsystems (T2) entlang eines gemeinsamen Abbildungsstrahlengangs (2a-2d) relativ zueinander verlagerbar, um jeweils eine Vergrößerung der Abbildung des in der Objektebene (1) anordenbaren Objektes zu ändern.

## Beschreibung

Die vorliegende Erfindung betrifft ein Mikroskopiesystem zur Abbildung eines in einer Objektebene des Mikroskopiesystems anordenbaren Objekts mit den Merkmalen des Oberbegriffs des unabhängigen Anspruchs 1.

Das Mikroskopiesystem umfaßt wenigstens ein Abbildungssystem, welches wenigstens einen Abbildungsstrahlengang zur Abbildung eines Abbildungsfeldes der Objektebene bereitstellt.

Derartige Mikroskopiesysteme finden beispielsweise in der Medizintechnik als Operationsmikroskope Verwendung, um ein in einer Objektebene angeordnetes Objekt zu beobachten.

Ein derartiges Operationsmikroskop ist beispielsweise aus der deutschen Offenlegungsschrift DE 103 00 925 A1 bekannt.

Allgemein ist es bei Operationsmikroskopen wünschenswert, eine kompakte Bauweise, das heißt eine geringe Bauhöhe und ein geringes Volumen, zu erzielen. Der Grund ist, daß beispielsweise die Zugänglichkeit eines Patienten für einen behandelnden Arzt während einer Operation durch ein Operationsmikroskop nicht unnötig eingeschränkt werden soll.

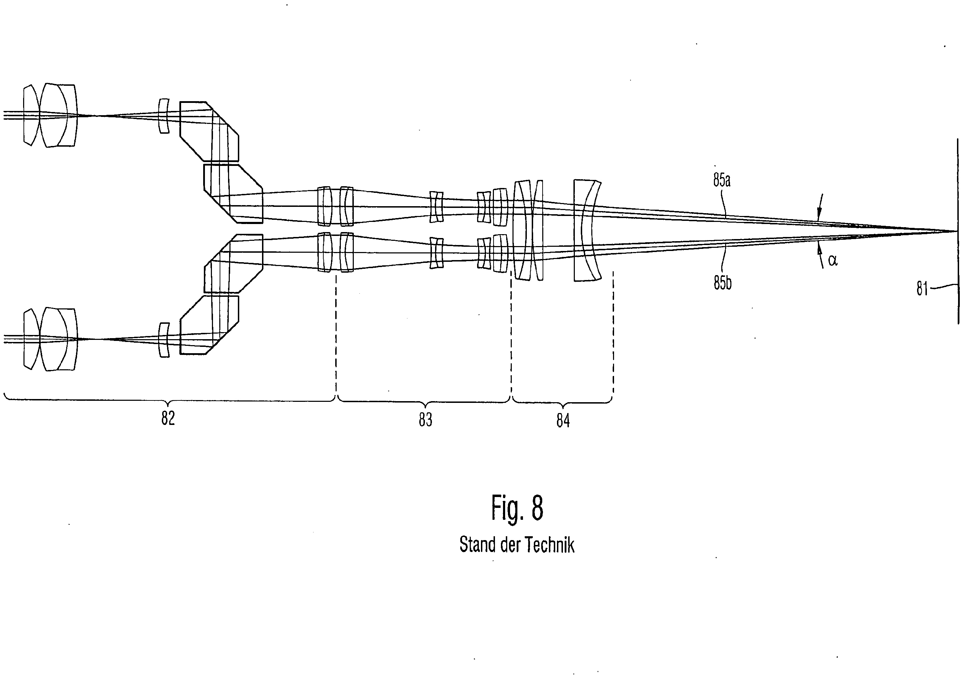

Wie in Figur 8 gezeigt setzt sich ein Operationsmikroskop allgemein aus einem Keplerfernrohr 82, einem Zoomsystem 83 sowie einem Hauptobjektiv 84 zusammen. In Figur 8 weist das Keplerfernrohr einen Binokulartubus auf. Das Keplerfernrohr 82, das Zoomsystem 83 und das Hauptobjektiv 84 sind seriell entlang von durch sie jeweils geführte Abbildungsstrahlengänge 85a, 85b angeordnet und dienen zur Abbildung eines in einer Objektebene 81 angeordneten Objektes (nicht gezeigt). Um einen modularen Aufbau des Operationsmikroskops zu realisieren, sind zwischen dem Keplerfernrohr 82, dem Zoomsystem 83 und dem Hauptobjektiv 84 afokale Schnittstellen angeordnet, in denen die Abbildungsstrahlengänge jeweils nach Unendlich abgebildet werden. Wie in Figur 8 gezeigt, sind derartige Operationsmikroskope häufig als Stereomikroskopiesysteme ausgebildet. Bei Stereomikroskopiesystemen werden wenigstens zwei Abbildungsstrahlengänge 85a und 85b so geführt, daß sie in der Objektebene 81 einen von Null verschiedenen Stereowinkel α einschließen.

Weiter ist zwischen dem Keplerfernrohr 82 und dem Zoomsystem 83 häufig ein in Figur 8 nicht gezeigtes Strahlteilerprisma angeordnet, um einen Nebenbeobachterstrahlengang herauszugreifen.

Bei den vorbekannten Operationsmikroskopen ist es nachteilig, daß sie in Abhängigkeit von einer bereitzustellenden Gesamtvergrößerung eine große Bauhöhe und ein großes Bauvolumen aufweisen.

Es ist daher Aufgabe der vorliegenden Erfindung, ein Mikroskopiesystem zur Verfügung zu stellen, bei dem das für die Erreichung einer Gesamtvergrößerung erforderliche Abbildungssystem einen besonders kompakten Aufbau aufweist.

Die vorstehende Aufgabe wird durch ein Mikroskopiesystem mit der Kombination der Merkmale der unabhängigen Ansprüche 1, 3 und 19 gelöst. Vorteilhafte Weiterbildungen finden sich in den Unteransprüchen.

Gemäß einer ersten Ausführungsform wird die vorstehende Aufgabe durch ein Mikroskopiesystem zur Abbildung eines in einer Objektebene des Mikroskopiesystems anordenbaren Objekts gelöst, wobei das Mikroskopiesystem ein Abbildungssystem mit mehreren optischen Elementen zur Bereitstellung wenigstens eines Abbildungsstrahlengangs umfaßt. Dabei umfassen die mehreren optischen Elemente eine Mehrzahl von optischen Linsen, welche der wenigstens eine Abbildungsstrahlengang nacheinander durchläuft und welche die Objektebene in ein Zwischenbild abbilden. Weiter sind die optischen Linsen derart konfiguriert, daß die Objektebene auf höchstens ein 0,9-faches und bevorzugt auf höchstens ein 0,8-faches und weiter bevorzugt auf höchstens ein 0,6-faches besonders bevorzugt auf höchstens ein 0,5-faches verkleinert in das Zwischenbild abgebildet ist. Dabei bedeutet "auf höchstens ein 0,9-faches verkleinert", daß die Abbildung der Objektebene im Zwischenbild um 0,1 (d.h. 10%) oder mehr verkleinert ist.

Somit ist das Mikroskopiesystem ausgebildet, ein in der Objektebene angeordnetes Objekt zunächst verkleinert in ein Zwischenbild abzubilden. Dieses Zwischenbild kann dann von einer nachfolgenden Optik vergrößert abgebildet werden, bis eine gewünschte Gesamtvergrößerung erreicht ist. In Folge der verkleinerten Abbildung des in der Objektebene angeordneten Objekts in das Zwischenbild ist es möglich, die dem Zwischenbild nachgeschaltete Optik besonders kompakt auszuführen, so daß das Mikroskopiesystem verglichen mit einem Mikroskopiesystem aus dem Stand der Technik, welches die gleiche Gesamtvergrößerung bewirkt, einen besonders kompakten Aufbau aufweist.

Dabei kann vorteilhaft sein, wenn die mehreren optischen Elemente des Abbildungssystems wenigstens ein Paar von Abbildungsstrahlengängen bereitstellen, welche in der Objektebene einen ersten Stereowinkel einschließen, wobei die Abbildungsstrahlengänge an dem Zwischenbild einen zweiten Stereowinkel einschließen, und wobei ein Verhältnis des ersten Stereowinkels in der Objektebene zu dem zweiten Stereowinkel an dem Zwischenbild kleiner als 0,9 und bevorzugt kleiner als 0,8 und besonders bevorzugt kleiner als 0,6 ist.

Somit ist der Stereowinkel an dem Zwischenbild gegenüber dem Stereowinkel in der Objektebene vergrößert. Folglich sind die Abbildungsstrahlengänge trotz verkleinerter Abbildung eines in der Objektebene angeordneten Objektes in der dem Zwischenbild nachfolgenden Optik gut trennbar, so daß ein gewünschter stereoskopischer Eindruck sichergestellt ist.

Gemäß einer weiteren Ausführungsform, die mit der ersten Ausführungsform kombiniert werden kann, wird die vorstehende Aufgabe auch durch ein Mikroskopiesystem zur Abbildung eines in einer Objektebene des Mikroskopiesystems anordenbaren Objekts gelöst, wobei das Mikroskopiesystem ein Abbildungssystem mit mehreren optischen Elementen zur Bereitstellung wenigstens eines Paars von Abbildungsstrahlengängen, welche in der Objektebene einen ersten Stereowinkel einschließen, umfaßt. Dabei umfassen die mehreren optischen Elemente eine Mehrzahl von optischen Linsen, welche das wenigstens eine Paar von Abbildungsstrahlengängen nacheinander durchläuft und welche die Objektebene in ein Zwischenbild abbilden. Dabei schließen die Abbildungsstrahlengänge an dem Zwischenbild einen zweiten Stereowinkel ein. Ein Verhältnis des ersten Stereowinkels in der Objektebene zu dem zweiten Stereowinkel an dem Zwischenbild ist kleiner als 0,9 und bevorzugt kleiner als 0,8 und besonders bevorzugt kleiner als 0,6.

Diese Vergrößerung des Stereowinkels an dem Zwischenbild gegenüber dem Stereowinkel in der Objektebene erleichtert eine Trennung der Abbildungsstrahlengänge durch die das Zwischenbild abbildender optischer Elemente. Hierdurch kann das Mikroskopiesystem besonders kompakt ausgebildet werden, da die Abbildungsstrahlengänge gegenüber dem Stand der Technik stärker auseinanderlaufen.

Gemäß einer Ausführungsform können die optischen Linsen von den Abbildungsstrahlengängen gemeinsam durchsetzt sein. Dann können die Abbildungsstrahlengänge in den Linsen so geführt sein, daß das Zwischenbild zwischen zwei Bereichen angeordnet ist, in denen ein Abstand von Stereoachsen der Abbildungsstrahlengänge von einer durch die Linsen festgelegten optischen Achse jeweils maximal ist. Dabei muß die optische Achse nicht entlang einer einzigen Geraden verlaufen, sondern kann auch abgeknickt verlaufen. Die Stereoachsen sind durch die jeweiligen Mitten der wenigstens zwei (stereoskopischen) Abbildungsstrahlengänge für einen Objektpunkt des in der Objektebene anordenbaren Objektes, welcher der Mitte der von dem Mikroskopiesystem bewirkten Abbildung entspricht, festgelegt.

Gemäß einer weiteren Ausführungsform kann der wenigstens eine Abbildungsstrahlengang in den Linsen so geführt sein, daß das Zwischenbild zwischen zwei Bereichen angeordnet ist, in denen ein Durchmesser eines in dem wenigstens einen Abbildungsstrahlengang geführten Strahlenbündels jeweils maximal ist.

Weiter kann zwischen dem Zwischenbild und einem ersten der beiden Bereiche, an denen ein Abstand von Stereoachsen der Abbildungsstrahlengänge zur optischen Achse und/oder ein Durchmesser eines in dem wenigstens einen Abbildungsstrahlengang geführten Strahlenbündels jeweils maximal ist, welcher erste Bereich zwischen dem Zwischenbild und der Objektebene angeordnet ist, eine erste Gruppe von optisch wirksamen Oberflächen von Linsen angeordnet sein. Weiter kann zwischen dem Zwischenbild und dem zweiten der beiden Bereiche eine zweite Gruppe von optisch wirksamen Oberflächen von Linsen und zwischen dem ersten Bereich und der Objektebene eine dritte Gruppe von optisch wirksamen Oberflächen von Linsen angeordnet sein. Dabei können beispielsweise sämtliche Oberflächen einer optischen Linse zu einer gemeinsamen Gruppe oder auch zu verschiedenen Gruppen gehören.

Dann kann es vorteilhaft sein, wenn ein Verhältnis der Gesamt-Brennweite (Summe der Brennweiten) der optisch wirksamen Flächen der ersten Gruppe zur Gesamt-Brennweite der optisch wirksamen Flächen der zweiten Gruppe wenigstens 1,1 und bevorzugt wenigstens 1,2 und besonders bevorzugt wenigstens 1,4 beträgt.

Auch kann es Vorteile bringen, wenn ein Verhältnis der Gesamt-Brennweite der optisch wirksamen Flächen der ersten Gruppe zur Gesamt-Brennweite der optisch wirksamen Flächen der dritten Gruppe zwischen 0,2 und 0,6 und bevorzugt zwischen 0,3 und 0,5 und besonders bevorzugt 0,4 beträgt.

Weitere Vorteile können erzielt werden, wenn ein Verhältnis der Gesamt-Brennweite der optisch wirksamen Flächen der zweiten Gruppe zur Gesamt-Brennweite der optisch wirksamen Flächen der dritten Gruppe zwischen 0,1 und 0,6 und bevorzugt zwischen 0,2 und 0,5 und besonders bevorzugt 0,3 beträgt.

Durch die vorstehend genannten Verhältnisse der Gesamtbrennweiten der Gruppen von optisch wirksamen Oberflächen kann eine verkleinerte Abbildung eines in der Objektebene anordenbaren Objektes in das Zwischenbild auf besonders einfache Weise sichergestellt werden.

Weiter kann es vorteilhaft sein, wenn ein Verhältnis der jeweiligen Abstände von Stereoachsen der Abbildungsstrahlengänge zur optischen Achse im ersten Bereich zu den jeweiligen Abständen von Stereoachsen der Abbildungsstrahlengänge zur optischen Achse im zweiten Bereich höchstens 1,1 und bevorzugt höchstens 1,2 und besonders bevorzugt höchstens 1,4 beträgt.

Somit sind die Abbildungsstrahlengänge in dem ersten Bereich zwischen Zwischenbild und Objektebene weiter beabstandet als in dem zweiten Bereich hinter dem Zwischenbild. Durch die Verringerung dieses Abstandes kann das Mikroskopiesystem besonders kompakt ausgebildet sein.

Um einen modularen Aufbau des Mikroskopiesystems zu erleichtern, können die Linsen ausgebildet sein, die Abbildungsstrahlengänge in wenigstens einem der Bereiche, in denen ein Abstand von Stereoachsen der Abbildungsstrahlengänge zur optischen Achse und/oder ein Durchmesser eines in dem wenigstens einen Abbildungsstrahlengang geführten Strahlenbündels maximal ist, nach Unendlich abzubilden.

Gemäß einer Ausführungsform kann das Abbildungssystem eine erste, zweite, dritte und vierte Spiegelfläche zur Ablenkung des wenigstens einen Abbildungsstrahlengangs aufweisen, wobei der wenigstens eine Abbildungsstrahlengang nacheinander an der ersten Spiegelfläche, der zweiten Spiegelfläche, der dritten Spiegelfläche und der vierten Spiegelfläche reflektiert ist. Durch diese mehrfache Ablenkung des Abbildungsstrahlengangs kann ein besonders kompakter Aufbau des Mikroskopiesystems erzielt werden.

Dabei können die erste Spiegelfläche und die vierte Spiegelfläche relativ zueinander einen Winkel von zwischen 80° und 100° und bevorzugt 90° einschließen, sowie die zweite Spiegelfläche und die dritte Spiegelfläche relativ zueinander einen Winkel von zwischen 80° und 100° und bevorzugt 90° einschließen, und die dritte Spiegelfläche und die vierte Spiegelfläche relativ zueinander einen Winkel von zwischen 50° und 70° und bevorzugt 60° (oder einen Winkel von zwischen 80° und 100° und bevorzugt 90°) einschließen. In der Folge wirken die Spiegelflächen wie ein Porro-System zweiter Art.

Gemäß einer Ausführungsform stellt das Abbildungssystem wenigstens ein Paar von Abbildungsstrahlengängen bereit, die in der Objektebene einen Stereowinkel einschließen, und weist das Abbildungssystem ein erstes Teilsystem auf, das eine Mehrzahl von entlang eines gemeinsamen Abbildungsstrahlengangs angeordneten optischen Linsen umfaßt, welche von beiden Abbildungsstrahlengängen des wenigstens einen Paars von Abbildungsstrahlengängen gemeinsam durchsetzt sind.

Dabei kann die zweite und/oder dritte und/oder vierte Spiegelfläche entlang einer gefalteten optischen Achse des ersten Teilsystems zwischen optischen Linsen des ersten Teilsystems angeordnet sein.

Um eine Vergrößerung der Abbildung des in der Objektebene anordenbaren Objektes und/oder einen Arbeitsabstand des Mikroskopiesystems zu ändern, kann es vorteilhaft sein, wenn wenigstens zwei Linsen des ersten Teilsystems entlang der von ihnen geführten Abbildungsstrahlengänge relativ zueinander verlagerbar sind.

Gemäß einer Ausführungsform weist das Abbildungssystem ein zweites Teilsystem auf, das eine Mehrzahl von optischen Linsen umfaßt, welche jeweils von lediglich einem Abbildungsstrahlengang des wenigstens einen Paars von Abbildungsstrahlengängen durchsetzt sind. Dabei legen die optischen Linsen des zweiten Teilsystems durch die von ihnen jeweils geführten Strahlenbündel auch den Verlauf der Abbildungsstrahlengänge in den optischen Linsen des ersten Teilsystems und damit den Verlauf der Stereoachsen fest.

Um eine Vergrößerung der Abbildung des in der Objektebene anordenbaren Objektes weiter anpassen zu können, kann es vorteilhaft sein, wenn wenigstens zwei Linsen des zweiten Teilsystems entlang eines gemeinsamen Abbildungsstrahlengangs relativ zueinander verlagerbar sind.

Gemäß einer weiteren Ausführungsform wird die vorstehende Aufgabe durch ein Mikroskopiesystem zur Abbildung eines in einer Objektebene des Mikroskopiesystems anordenbaren Objekts gelöst, welches auf den vorstehend beschriebenen Ausführungsformen aufbauen kann und wenigstens ein Abbildungssystem zur Bereitstellung wenigstens eines Paars von Abbildungsstrahlengängen, welche in der Objektebene einen Stereowinkel einschließen, umfaßt. Dabei weist das Abbildungssystem ein erstes Teilsystem auf, das eine Mehrzahl von optischen Linsen umfaßt, welche von beiden Abbildungsstrahlengängen des wenigstens einen Paars von Abbildungsstrahlengängen gemeinsam durchsetzt sind. Weiter weist das Abbildungssystem ein zweites Teilsystem auf, das eine Mehrzahl von optischen Linsen umfaßt, welche jeweils von lediglich einem Abbildungsstrahlengang des wenigstens einen Paars von Abbildungsstrahlengängen durchsetzt sind. Dabei sind wenigstens zwei Linsen des ersten Teilsystems und wenigstens zwei Linsen des zweiten Teilsystems entlang eines gemeinsamen Abbildungsstrahlengangs relativ zueinander verlagerbar, um jeweils eine Vergrößerung der Abbildung des in der Objektebene anordenbaren Objektes zu ändern.

Folglich kann die durch das Mikroskopiesystem insgesamt bewirkte einstellbare Vergrößerung der Abbildung des in der Objektebene anordenbaren Objektes innerhalb des Mikroskopiesystems auf zwei seriell angeordnete Zoomsysteme aufgeteilt sein, von denen ein erstes im ersten Teilsystem und ein zweites im zweiten Teilsystem angeordnet ist.

Allgemein kann es vorteilhaft sein, wenn das Mikroskopiesystem weiter ein Beleuchtungssystem mit einem Beleuchtungsstrahlengang zur Beleuchtung der Objektebene umfaßt.

Ein Mikroskopiesystem mit den vorstehend beschriebenen Merkmalen ist aufgrund seines kompakten Aufbaus besonders gut als Stereomikroskop und insbesondere als Operationsmikroskop geeignet.

Im Folgenden werden bevorzugte Ausführungsformen der vorliegenden Erfindung unter Bezugnahme auf die beigefügten Zeichnungen beschrieben. In den Zeichnungen werden gleiche oder ähnliche Bezugszeichen verwendet, um auf gleiche oder ähnliche Elemente zu verweisen. Dabei zeigt
- Figur 1A: schematisch einen Strahlengang durch eine in eine Ebene entfaltete Anordnung wesentlicher Elemente eines Abbildungssystems eines Mikroskopiesystems gemäß einer bevorzugten ersten Ausführungsform der vorliegenden Erfindung,
- Figur 1B: schematisch eine perspektivische Ansicht einer räumlichen Anordnung der wesentlichen Elemente des Abbildungssystems aus Figur 1A,
- Figur 2A: vergrößert schematisch einen Strahlengang durch optische Linsen des Abbildungssystems aus Figur 1A,
- Figur 2B: schematisch einen Strahlengang durch optische Linsen, die alternativ zu Figur 2A in dem Abbildungssystem gemäß der ersten Ausführungsform verwendbar sind,
- Figur 3: beispielhaft einen Größenvergleich zwischen Linsen eines erfindungsgemäßen Mikroskopiesystems mit entsprechenden Linsen eines herkömmlichen Mikroskopiesystems,
- Figur 4: beispielhaft eine in dem Mikroskopiesystem aus Figur 1A alternativ verwendbare Linsenanordnung,
- Figur 5: beispielhaft verschiedene Betriebszustände einer weiteren in dem Mikroskopiesystem aus Figur 1A alternativ verwendbaren Linsenanordnung,
- Figur 6: beispielhaft verschiedene Betriebszustände einer weiteren in dem Mikroskopiesystem aus Figur 1A alternativ verwendbaren Linsenanordnung,
- Figur 7: schematisch einen Strahlengang eines Abbildungssystems eines Mikroskopiesystems gemäß einer zweiten Ausführungsform der vorliegenden Erfindung, und
- Figur 8: schematisch den prinzipiellen Aufbau eines Mikroskopiesystems nach dem Stand der Technik.

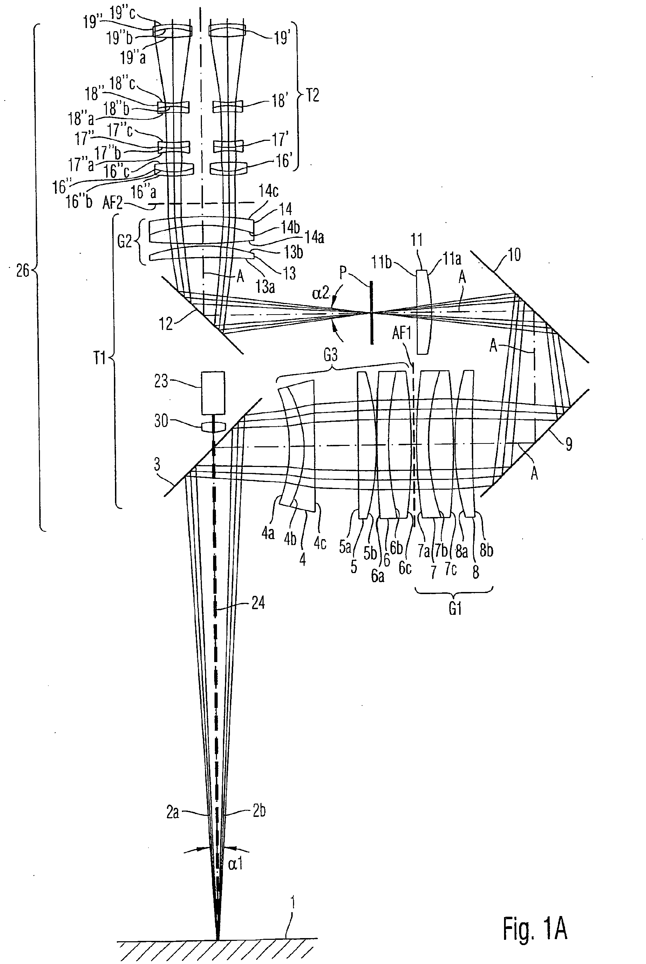

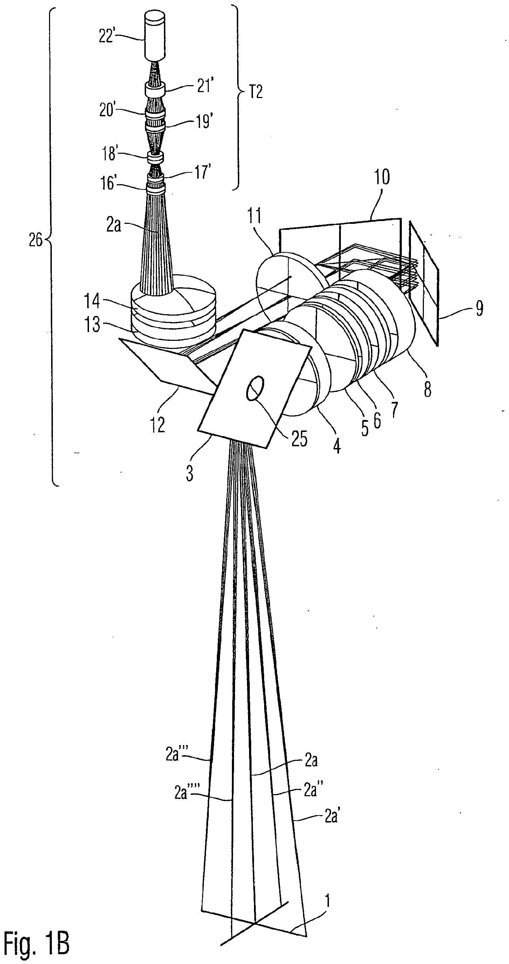

Im Folgenden wird eine bevorzugte erste Ausführungsform der vorliegenden Erfindung unter Bezugnahme auf die Figuren 1A und 1B näher erläutert.

Figur 1A zeigt schematisch einen Strahlengang durch eine in eine Ebene entfaltete Anordnung wesentlicher Elemente eines Abbildungssystems 26 eines Mikroskopiesystems gemäß der bevorzugten ersten Ausführungsform der vorliegenden Erfindung.

Das Mikroskopiesystem gemäß der bevorzugten ersten Ausführungsform umfaßt ein optisches Abbildungssystem 26, welches ein Paar von Abbildungsstrahlengängen 2a, 2b bereitstellt. Alternativ kann das Abbildungssystem 26 jedoch auch lediglich einen Abbildungsstrahlengang oder auch mehr als nur ein Paar von Abbildungsstrahlengängen bereitstellen.

Die Abbildungsstrahlengänge 2a und 2b treffen sich jeweils paarweise in der Objektebene 1. Stereoachsen der Abbildungsstrahlengänge 2a, 2b schließen dabei einen ersten Stereowinkel α1 ein. Somit bildet das Mikroskopiesystem ein Stereomikroskop. In Figur 1A beträgt der erste Stereowinkel α1 je nach Betriebszustand des Mikroskopiesystems zwischen 4° und 10°. Die vorliegende Erfindung ist jedoch nicht auf den vorstehend angegebenen Winkelbereich beschränkt. Vielmehr ist es ausreichend, wenn der Stereowinkel von Null Grad verschieden ist.

Das Abbildungssystem 26 wird von einem ersten optischen Teilsystem T1 und einem zweiten optischen Teilsystem T2 gebildet, welche Teilsysteme T1 und T2 jeweils eine Mehrzahl optischer Elemente aufweisen.

Das erste Teilsystem T1 weist entlang einer gemeinsamen optischen Achse A ein erstes optisches Umlenkelement mit einer ersten optischen Spiegelfläche 3, eine erste, zweite, dritte, vierte und fünfte optische Linse 4, 5, 6, 7 und 8, ein zweites optisches Umlenkelement mit einer zweiten optischen Spiegelfläche 9, ein drittes optisches Umlenkelement mit einer dritten optischen Spiegelfläche 10, eine sechste optische Linse 11, ein viertes optisches Umlenkelement mit einer vierten optischen Spiegelfläche 12 sowie eine siebte und achte optische Linse 13 und 14 auf. Dabei werden die Linsen 4, 5, 6, 7, 8, 11, 13 und 14 des ersten Teilsystems T1 von den beiden Abbildungsstrahlengängen 2a und 2b gemeinsam durchsetzt.

Die Abbildungsstrahlengänge 2a und 2b werden nacheinander an der ersten Spiegelfläche 3, der zweiten Spiegelfläche 9, der dritten Spiegelfläche 10 und der vierten Spiegelfläche 12 reflektiert und so abgelenkt. Ersichtlich wird dabei auch die durch die Linsen 4, 5, 6, 7, 8, 11, 13 und 14 des ersten Teilsystems T1 festgelegte gemeinsame optische Achse A mehrfach durch die Spiegelflächen 3, 9, 10 und 12 abgeknickt.

Wie besonders gut aus Figur 1B ersichtlich, schließen Normalenvektoren der durch die erste Spiegelfläche 3 und die vierte Spiegelfläche 12 aufgespannten Ebenen (und Normalenvektoren der durch die dritte Spiegelfläche 10 und die vierte Spiegelfläche 12 aufgespannten Ebenen) und Normalenvektoren der durch die zweite Spiegelfläche 9 und die dritte Spiegelfläche 10 aufgespannten Ebenen relativ zueinander jeweils einen konstanten Winkel von 90° ein. Der Winkel kann jedoch auch von 90° abweichen und insbesondere zwischen 70° und 110° und bevorzugt zwischen 80° und 100° betragen. Weiter schließen Normalenvektoren der durch die dritte Spiegelfläche 10 und die vierte Spiegelfläche 12 aufgespannten Ebenen relativ zueinander jeweils einen konstanten Winkel von 60° ein. Der Winkel kann jedoch auch von 60° abweichen und insbesondere zwischen 40° und 80° und bevorzugt zwischen 80° und 100° betragen.

Diese Anordnung der ersten bis vierten Spiegelfläche 3, 9, 10 und 12 wirkt optisch insgesamt wie ein Porro-System zweiter Art. Das heißt, daß die erste bis vierte Spiegelfläche 3, 9, 10 und 12 sowohl eine Bildumkehr als auch eine Pupillenvertauschung bewirken. Weiter wird durch diese Anordnung der Spiegelflächen 3, 9, 10 und 12 aufgrund der mehrfachen Faltung der Abbildungsstrahlengänge 2a, 2b ein besonders kompakter Aufbau des Abbildungssystems 26 erzielt.

Die optischen Linsen 4-8 und 11 sind in dieser bevorzugten ersten Ausführungsform so konfiguriert, daß sie die Objektebene 1 auf einen Faktor 0,36 verkleinert (das heißt um 64% verkleinert) in ein Zwischenbild P abbilden. Dabei wird unter einem Zwischenbild eine zur Objektebene 1 optisch konjugierte Ebene verstanden (die Ebene kann auch gekrümmt sein). Das Zwischenbild P ist zwischen der sechsten und der siebten Linse 11, 13 und genauer gesagt zwischen der sechsten Linse 11 und der vierten Spiegelfläche 12 angeordnet. Es wird betont, daß die vorliegende Erfindung nicht auf eine Verkleinerung der Objektebene 1 um ein 0,36-faches in das Zwischenbild P oder die vorstehende genaue Anordnung des Zwischenbildes beschränkt ist. Vielmehr ist es ausreichend, wenn die Objektebene auf höchstens ein 0,9-faches und bevorzugt auf höchstens ein 0,8-faches und weiter bevorzugt auf höchstens ein 0,6-faches besonders bevorzugt auf höchstens ein 0,5-faches verkleinert in das Zwischenbild P abgebildet ist.

Angesichts der einem Mikroskopiesystem innewohnenden Aufgabe, eine vergrößerte Abbildung eines in der Objektebene 1 anordenbaren Objektes zu bewirken, mag es überraschen, daß die Objektebene 1 in dem Mikroskopiesystem gemäß der bevorzugten ersten Ausführungsform der vorliegenden Erfindung nicht vergrößert, sondern ausdrücklich verkleinert in das Zwischenbild P abgebildet ist. Dies bringt jedoch erhebliche Vorteile mit sich, wie noch erläutert werden wird.

An dem Zwischenbild P schließen die Abbildungsstrahlengänge 2a und 2b einen zweiten Stereowinkel α2 ein, wobei ein Verhältnis des ersten Stereowinkels α1 in der Objektebene 1 zu dem zweiten Stereowinkel α2 an dem Zwischenbild P kleiner als 0,9 und bevorzugt kleiner als 0,8 und besonders bevorzugt kleiner als 0,6 ist. Im vorliegenden Fall beträgt der zweite Stereowinkel α2 gleich 19,6°, bei einem objektseitigen Stereowinkel α1 = 7°. Somit beträgt das Verhältnis 0,36.

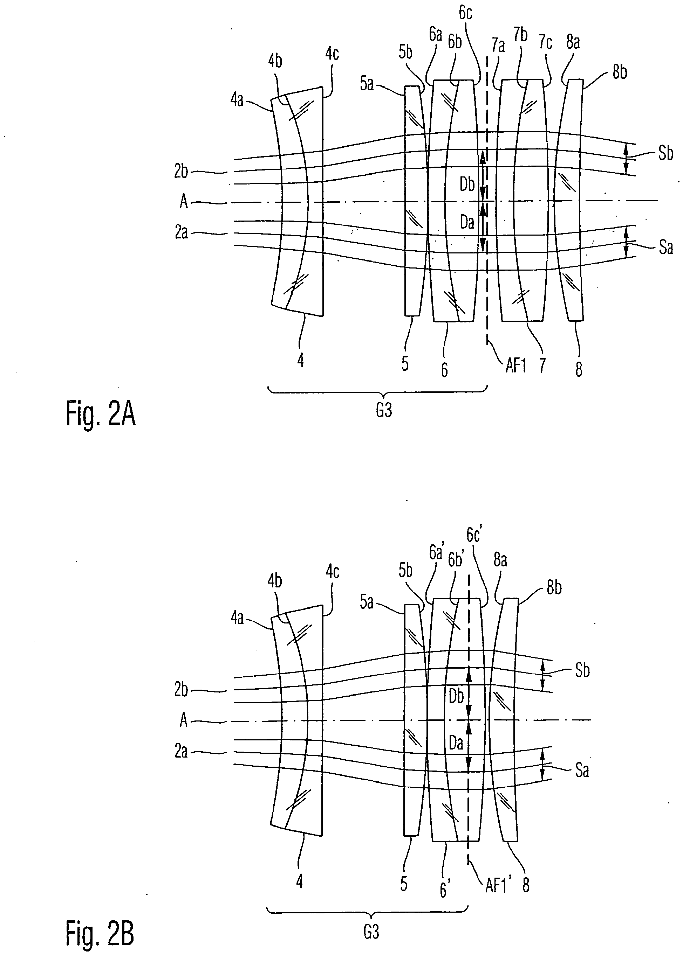

Weiter ist zwischen der dritten optischen Linse 6 und der vierten optischen Linse 7 sowie der achten optischen Linse 14 nachgeordnet jeweils eine afokale Schnittstelle AF1, AF2 angeordnet, in der die Abbildungsstrahlengänge 2a, 2b jeweils nach Unendlich abgebildet werden. Das Vorsehen der afokalen Schnittstellen AF1, AF2 ermöglicht einen modularen Aufbau des Abbildungssystems 26 des Mikroskopiesystems. Diese afokale Schnittstelle AF1 ist in Figur 2A schematisch vergrößert dargestellt.

Alternativ zur Anordnung des Zwischenbilds P zwischen den afokalen Schnittstellen AF1, AF2, können die Abbildungsstrahlengänge 2a, 2b in den Linsen 4-8, 11 bzw. 13, 14 auch so geführt sein, daß das Zwischenbild P zwischen zwei Bereichen angeordnet ist, in denen ein Abstand Da, Db von Stereoachsen der Abbildungsstrahlengänge 2a, 2b von der durch die Linsen 4-8, 11, 13, 14 festgelegten optischen Achse A jeweils maximal ist. Ein derartiger Bereich AF1' ist in Figur 2B schematisch dargestellt. Diesen Bereichen entsprechen in den Figuren 1A, 1B die afokalen Schnittstellen AF1, AF2.

Aus Figur 2A, 2B ist auch ersichtlich, daß in den vorstehend genannten Bereichen, denen in den Figuren 1A, 1B die afokalen Schnittstellen AF1, AF2 entsprechen, ein Durchmesser Sa, Sb eines in den Abbildungsstrahlengängen 2a, 2b geführten Strahlenbündels jeweils ein Maximum aufweist.

Diese afokalen Schnittstellen AF1, AF2 bzw. vorstehend genannten Bereiche erlauben es, die optischen Linsen 4-8, 11, 13, 14 des erste Teilsystems T1 der in den Figuren 1A, 1B gezeigten bevorzugten ersten Ausführungsform in drei Gruppen G1, G2, G3 zu unterteilen.

Die erste Gruppe G1, die zwischen dem Zwischenbild P und einer ersten der beiden afokalen Schnittstellen AF1, welche erste afokale Schnittstelle AF1 zwischen dem Zwischenbild P und der Objektebene 1 angeordnet ist, umfaßt die Linsen 7, 8 und 11 mit den optisch wirksamen Oberflächen 7a, 7b, 7c, 8a, 8b, 11a und 11b. Die Gesamt-Brennweite der ersten Gruppe G1 beträgt in der gezeigten ersten Ausführungsform 115,3 mm.

Die zweite Gruppe G2, die zwischen dem Zwischenbild P und der anderen zweiten afokalen Schnittstelle AF2 angeordnet ist, umfaßt die Linsen 13 und 14 mit den optisch wirksamen Oberflächen 13a, 13b, 14a, 14b und 14c. Die Gesamt-Brennweite der zweiten Gruppe G2 beträgt in der gezeigten ersten Ausführungsform 82,3 mm.

Die dritte Gruppe G3, die zwischen der ersten afokalen Schnittstelle AF1 und der Objektebene 1 angeordnet ist, umfaßt die Linsen 4, 5 und 6 mit den optisch wirksamen Oberflächen 4a, 4b, 4c, 5a, 5b, 6a, 6b und 6c. Die Gesamt-Brennweite der dritten Gruppe G3 beträgt in der gezeigten ersten Ausführungsform 322,5 mm.

Anhand der so festgelegten Gruppen G1, G2 und G3 ist es möglich, für die Brennweiten von optisch wirksamen Oberflächen der Linsen der jeweiligen Gruppen vorteilhafte Beziehungen anzugeben. Dabei wird unter einer optisch wirksamen Oberfläche eine von den Abbildungsstrahlengängen 2a, 2b durchlaufene Linsenoberfläche mit einem Krümmungsradius von höchstens 10⁴ mm und bevorzugt höchstens 5 * 10³ mm und besonders bevorzugt höchstens 10³ mm verstanden. Es ist offensichtlich, daß eine Linse auch gleichzeitig zwei unterschiedlichen Gruppen angehören kann, wenn ihre optischen Oberflächen unterschiedlichen Gruppen angehören. Für den gemäß der Aufgabenstellung gewünschten kompakten Aufbau des erfindungsgemäßen Mikroskopiesystems bei einer dem Stand der Technik entsprechenden Gesamtvergrößerung hat es sich weiter als besonders vorteilhaft erwiesen, wenn ein Verhältnis der Gesamt-Brennweite (d.h. der Summe der Brennweiten) der optisch wirksamen Oberflächen 7a, 7b, 7c, 8a, 8b, 11a und 11b der Linsen 7, 8 und 11 der ersten Gruppe G1 zur Gesamt-Brennweite der optisch wirksamen Oberflächen 13a, 13b, 14a, 14b und 14c der Linsen 13, 14 der zweiten Gruppe G2 wenigstens 1,1 und bevorzugt wenigstens 1,2 und besonders bevorzugt wenigstens 1,4 beträgt. In der in Figur 1A gezeigten ersten Ausführungsform beträgt dieses Verhältnis, das auch als afokaler Vergrößerungsfaktor des Umkehrsystems bezeichnet werden kann, 1,40. Das gezeigte Umkehrsystem weist die Eigenschaften auf, dass es die optisch wirksamen Elemente zwischen der ersten afokalen Schnittstelle AF1 und der zweiten afokalen Schnittstelle AF2 umfasst, eine Bildumkehr und Pupillenvertauschung bewirkt und dass Zwischenbild P enthält. Dieser afokale Vergrößerungsfaktor trägt wesentlich zur geforderten Gesamtvergrößerung des Mikroskopiesystems bei.

Eine wesentliche Voraussetzung für den gemäß der Aufgabenstellung geforderten kompakten Aufbau des Mikroskopiesystems ist die Verkleinerung der Abbildung eines in der Objektebene 1 anordenbaren Objektes in das Zwischenbild P bzw. die Vergrößerung des zweiten Stereowinkels α2 im Zwischenbild P gegenüber dem ersten Stereowinkel α1 in der Objektebene 1.

Als besonders vorteilhaft hat sich herausgestellt, wenn ein Verhältnis der Gesamt-Brennweite der optisch wirksamen Oberflächen 7a, 7b, 7c, 8a, 8b, 11a und 11b der Linsen 7, 8 und 11 der ersten Gruppe G1 zur Gesamt-Brennweite der optisch wirksamen Oberflächen 4a, 4b, 4c, 5a, 5b, 6a, 6b und 6c der Linsen 4, 5 und 6 der dritten Gruppe G3 zwischen 0,2 und 0,6 und bevorzugt zwischen 0,3 und 0,5 und besonders bevorzugt 0,4 beträgt. In der in Figur 1A gezeigten ersten Ausführungsform beträgt dieses Verhältnis, das auch als Abbildungsmaßstab für ein in der Objektebene 1 anordenbares Objekt in das Zwischenbild P bezeichnet werden kann, 0,36.

Es bringt zusätzliche Vorteile, wenn ein Verhältnis der Gesamt-Brennweite der optisch wirksamen Oberflächen 13a, 13b, 14a, 14b und 14c der Linsen 13, 14 der zweiten Gruppe G2 zur Gesamt-Brennweite der optisch wirksamen Oberflächen 4a, 4b, 4c, 5a, 5b, 6a, 6b und 6c der Linsen 4, 5 und 6 der dritten Gruppe G3 zwischen 0,1 und 0,6 und bevorzugt zwischen 0,2 und 0,5 und besonders bevorzugt 0,3 beträgt. In der in Figur 1A gezeigten ersten Ausführungsform beträgt dieses Verhältnis 0,255. Dieses Verhältnis setzt sich aus der durch die Linsen 4, 5 und 6 bewirkten Lupenvergrößerung der Objektebene 1 nach Unendlich von VLO = 250 mm/(Brennweite der Linsen 4, 5, 6) und der durch die Linsen 13 und 14 bewirkten Lupenvergrößerung des Zwischenbildes P nach Unendlich von VLO = 250 mm/(Brennweite der Linsen 13, 14) zusammen.

Das Verhältnis der jeweiligen Abstände Da, Db von Stereoachsen der Abbildungsstrahlengänge 2a, 2b zur optischen Achse A in der ersten afokalen Schnittstelle AF1 bzw. dem ersten Bereich zu den jeweiligen Abständen von Stereoachsen der Abbildungsstrahlengänge 2a, 2b zur optischen Achse A in der zweiten afokalen Schnittstelle AF2 bzw. dem zweiten Bereich höchstens 1,1 und bevorzugt höchstens 1,2 und besonders bevorzugt höchstens 1,4 beträgt. Hinsichtlich der Abstände der Stereoachsen zu der von den jeweiligen Linsen festgelegten optischen Achse in den jeweiligen afokalen Schnittstellen bzw. Bereichen wird ergänzend auf Figuren 2A, 2B verwiesen.

Die vorstehend genannten Verhältnisse sind alle geeignet, zu einer verkleinerten Abbildung der Objektebene 1 in das Zwischenbild P und/oder einer Vergrößerung des zweiten Stereowinkels α2 an dem Zwischenbild P gegenüber dem ersten Stereowinkel α1 in der Objektebene 1 beizutragen. Dabei ist es aber nicht zwingend erforderlich, daß gleichzeitig alle vorstehenden Verhältnisse erfüllt sind, solange eine auf höchstens ein 0,9-faches verkleinerte Abbildung der Objektebene 1 in das Zwischenbild P und/oder eine Vergrößerung des zweiten Stereowinkels α2 an dem Zwischenbild P gegenüber dem ersten Stereowinkel α1 in der Objektebene 1 auf wenigstens das 1,1-fache erzielt wird. Dabei werden die Stereowinkel α1, α2 jeweils durch die Stereobasis des Abbildungssystems 26 festgelegt.

Auch das zweite Teilsystem T2 des Abbildungssystems 26 weist eine Vielzahl von optischen Linsen 16' - 19' und 16" - 19" auf, in denen die Abbildungsstrahlengänge 2a und 2b jedoch anders als im ersten Teilsystem T1 jeweils getrennt geführt werden. Dies bedeutet, daß die optischen Linsen 16' - 19', 16" - 19", 16"' - 19"' und 16"" - 19"" jeweils von je einem Abbildungsstrahlengang 2a oder 2b durchsetzt sind.

Die Stereoachsen sind durch die jeweiligen Mitten der beiden (stereoskopischen) Abbildungsstrahlengänge 2a und 2b für einen Objektpunkt des in der Objektebene 1 anordenbaren Objektes, welcher der Mitte der von dem Mikroskopiesystem bewirkten Abbildung entspricht, festgelegt. Anstelle dieses Objektpunktes kann hierfür alternativ auch direkt ein Punkt der Objektebene 1 verwendet werden, welcher der Mitte der von dem Mikroskopiesystem bewirkten Abbildung entspricht. Diese Definition der Stereoachsen ist am besten anhand der Figuren 1A und 1B verständlich. In der Figur 1A sind Strahlenbündel der beiden (stereoskopischen) Abbildungsstrahlengänge 2a und 2b für die Abbildung eines Punktes der Objektebene 1, welcher der Mitte der von dem Mikroskopiesystem bewirkten Abbildung entspricht, dargestellt. Die Mittenstrahlen der Strahlenbündel dieser beiden Abbildungsstrahlengänge 2a und 2b definieren die beiden Stereoachsen. In Figur 1B sind Strahlenbündel 2a, 2a', 2a", 2a"' und 2a"" nur eines Abbildungsstrahlengangs dargestellt. Dabei ist ein Strahlenbündel des Abbildungsstrahlengangs für die Abbildung eines Punktes der Objektebene 1, welcher der Mitte der von dem Mikroskopiesystem bewirkten Abbildung entspricht, stellvertretend für den ganzen Abbildungsstrahlengang mit 2a gekennzeichnet. Mittelstrahlen dieses Strahlenbündels 2a können zur Festlegung der Stereoachsen verwendet werden. Die Mittelstrahlen der in Figur 1B zusätzlich gezeigten Randstrahlenbündel 2a', 2a", 2a"' und 2a"" des Abbildungsstrahlenganges können hingegen nicht zur Festlegung der Stereoachsen verwendet werden. Dabei legen die optischen Linsen 16' - 19' und 16" - 19" des zweiten Teilsystems T2 durch die von ihnen jeweils geführten Strahlenbündel auch den Verlauf der Abbildungsstrahlengänge 2a, 2b in den optischen Linsen 4, 5, 6, 7, 8, 11, 13 und 14 des ersten Teilsystems T1 und damit den Verlauf der Stereoachsen fest.

Über die optischen Linsen 16' - 19' und 16" - 19" des zweiten Teilsystems T2 und die siebte und achte Linse 13, 14 der zweiten Gruppe G2 des ersten Teilsystems T1 wird das Zwischenbild P vergrößert abgebildet. Da die Objektebene 1 verkleinert in das Zwischenbild P abgebildet ist und/oder der zweite Stereowinkels α2 an dem Zwischenbild P gegenüber dem ersten Stereowinkel α1 in der Objektebene 1 vergrößert ist, kann diese vergrößerte Abbildung des Zwischenbildes P in dem zweiten Teilsystem T2 durch optische Elemente, zum Beispiel Linsen, mit kleineren Durchmessern und kleineren relativen Abständen voneinander entlang eines jeweils geführten Abbildungsstrahlengangs 2a, 2b erfolgen. Folglich weist das Abbildungssystem 26 des erfindungsgemäßen Mikroskopiesystems einen besonders kompakten Aufbau auf.

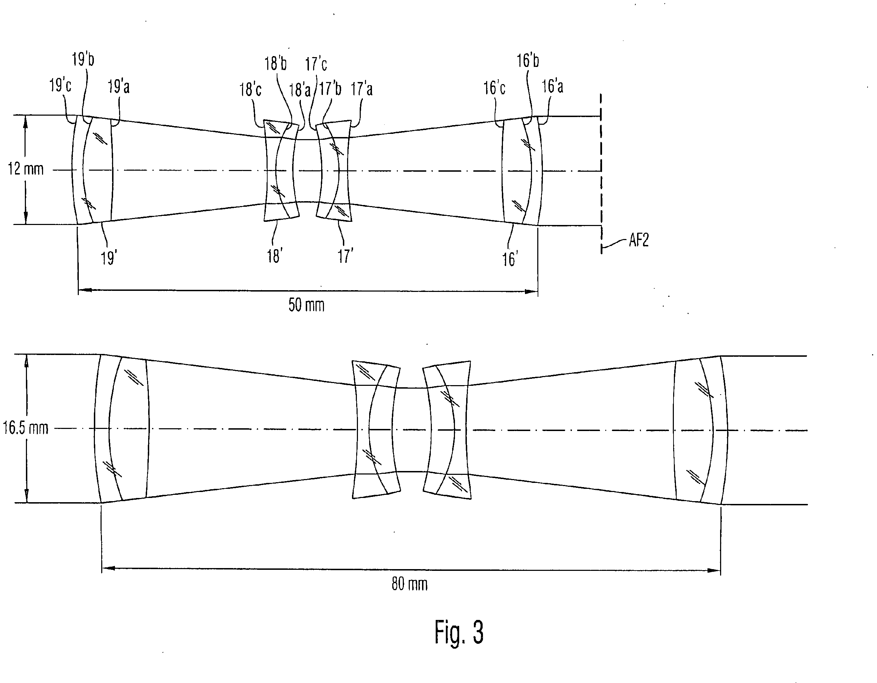

Figur 3 zeigt beispielhaft einen Größenvergleich zwischen Linsen 16' bis 19' des zweiten Teilsystems T2 des erfindungsgemäßen Mikroskopiesystems (in Figur 3 oben) mit entsprechenden Linsen eines herkömmlichen Mikroskopiesystems (in Figur 3 unten).

Wie in Figur 1B angedeutet kann jeder Abbildungsstrahlengang 2a und 2b des zweiten Teilsystems T2 ferner beispielsweise je zwei optischen Linsen 20' und 21' und einen Kameraadapter 22' für eine (in Figur 1A, 1B nicht gezeigte) Digitalkamera zur Erzeugung von Bilddaten aufweisen. Anstelle von separaten Digitalkameras kann für beide Abbildungsstrahlengänge 2a, 2b auch eine gemeinsame Stereokamera vorgesehen sein.

Gemäß einer nicht eigens gezeigten alternativen Ausführungsform ist anstelle der optischen Linsen 20' und 21' sowie des Kameraadapters 22' für jeden Abbildungsstrahlengang 2a und 2b des zweiten Teilsystems T2 ein Tubus mit einer Okularoptik für eine direkte visuelle Beobachtung durch einen Benutzer vorgesehen.

Gemäß eines weiteren Aspekts der vorliegenden Erfindung ist in der in Figur 1A, 1B gezeigten bevorzugten ersten Ausführungsform die erste Linse 4 relativ zu der zweiten Linse 5 sowie die dritte Linse 6 relativ zu der vierten Linse 7 entlang der optischen Achse A und damit auch entlang der von ihnen geführten Abbildungsstrahlengänge 2a, 2b verlagerbar, um einen Abstand der Objektebene 1 von dem Abbildungssystem 26 des Mikroskopiesystems und damit einen Arbeitsabstand sowie eine Vergrößerung der Abbildung eines in der Objektebene 1 anordenbaren Objektes zu ändern. Gleichzeitig ist durch geeignete Wahl der Systemdaten dieser optischen Linsen 4, 5, 6 und 7 des ersten optischen Teilsystems automatisch sichergestellt, daß die Abbildungsstrahlengänge 2a und 2b auch nach einer Verlagerung der Linsen 4, 5, 6, 7 in der Objektebene den von Null verschiedenen Stereowinkel α1 einschließen.

Zusätzlich sind jeweils drei Abstände zwischen vier Linsen 16' - 19' und 16" - 19" des zweiten Teilsystems T2, die in einem jeweiligen Abbildungsstrahlengang 2a und 2b entlang einer gemeinsamen optischen Achse angeordnet sind, relativ zueinander entlang der optischen Achse und damit auch entlang des jeweiligen gemeinsamen Abbildungsstrahlengangs 2a, 2b verlagerbar, um eine Änderung einer Vergrößerung der von dem zweiten Teilsystem T2 in den jeweiligen Abbildungsstrahlengängen 2a und 2b jeweils bewirkten Abbildung zu bewirken.

Anstelle verlagerbarer Linsen können alternativ auch optische Elemente variabler Brechkraft, wie zum Beispiel Flüssigkeitslinsen, verwendet werden.

Somit weist das in Figur 1A und 1B gezeigte erfindungsgemäße Mikroskopiesystem zwei seriell angeordnete Zoomsysteme auf, von denen ein Zoomsystem von optischen Linsen des ersten Teilsystems T1 und das zweite Zoomsystem von optischen Linsen des zweiten Teilsystems T2 bereitgestellt wird und deren Wirkungen sich ergänzen.

Die optischen Systemdaten des in Figur 1A gezeigten Stereomikroskops lauten wie folgt:

| Fläche | Radius | Dicke | Medium | Freier Durchmesser |
|---|---|---|---|---|
| | [mm] | [mm] | | [mm] |
| Kameraadapter / Tubus | | | | |
| 19"c | 28,930 | | | 12,00 |
| | | 1,2 | LAFN7 | |
| 19"b | 15,052 | | | 11,8 |
| | | 3,0 | NPSK53 | |
| 19"a | -144,79 | | | 11,5 |
| | | 22,68...1,02 | Luft | |
| 18"c | -35,928 | | | 10, 0 |
| | | 1,2 | NBAF4 | |
| 18"b | 9,9568 | | | 10,0 |
| | | 2,0 | NSF6 | |
| 18"a | 19,467 | | | 9,5 |
| | | 11,5 ... 11,5 | Luft | |
| 17"c | -19,467 | | | 9,5 |
| | | 2,0 | NSF6 | |
| 17"b | -9,9568 | | | 10,0 |
| | | 1,2 | NBAF4 | |
| 17"a | 35,928 | | | 10,5 |
| | | 1,02...22,68 | Luft | |
| 16"c | 144,79 | | | 11,5 |
| | | 3,0 | NPSK53 | |
| 16"b | -15,052 | | | 11,8 |
| | | 1,2 | LAFN7 | |
| 16"a | -28,930 | | | 12,0 |
| | | 20,0 | Luft | |
| 14c | 102,55 | | | 34,0 |
| | | 3,0 | LAFN7 | |
| 14b | 50,047 | | | 34,0 |
| | | 6,0 | NFK51 | |
| 14a | -197,88 | | | 34,0 |
| | | 1,0 | Luft | |
| 13b | 52,089 | | | 34,0 |
| | | 4,0 | NFK51 | |
| 13a | 306,55 | | | 34,0 |
| | | 20,0 | Luft | |
| 12 | Plan | | | Spiegel |
| | | 65,805 | Luft | |
| 11b | Plan | | | 30,0 |
| | | 4,0 | LAFN7 | |
| 11a | -116,05 | | | 30,0 |
| | | 38,195 | Luft | |
| 10 | Plan | | | Spiegel |
| | | 44,0 | Luft | |
| 9 | Plan | | | Spiegel |
| | | 23,0 | Luft | |
| 8b | -392,46 | | | 48,0 |
| | | 6,0 | NFK51 | |
| 8a | -75,151 | | | 48,0 |
| | | 1,0 | Luft | |
| 7c | 273,58 | | | 48,0 |
| | | 8,0 | NFK51 | |
| 7b | -68,282 | | | 48,0 |
| | | 4,0 | LAFN7 | |
| 7a | -151,48 | | | 48,0 |
| | | 2,0...18,0 | Luft | |
| 6c | 238,24 | | | 48,0 |
| | | 7,0 | NPSK53 | |
| 6b | -93,039 | | | 48,0 |
| | | 4,0 | SF56A | |
| 6a | -332,28 | | | 48,0 |
| | | 0,1 | Luft | |
| 5b | 107,96 | | | 46,0 |
| | | 5,0 | NSK16 | |
| 5a | Plan | | | 46,0 |
| | | 16,5...0,5 | Luft | |
| 4c | Plan | | | 45,0 |
| | | 3,0 | NSSK8 | |
| 4b | 43,717 | | | 42,0 |
| | | 5,0 | NSF6 | |
| 4a | 66,970 | | | 40,0 |
| | | 22,0 | Luft | |
| 3 | Plan | | | Spiegel |
| | | 224,0...424,0 | Luft | |
| Objektebene | | | | |

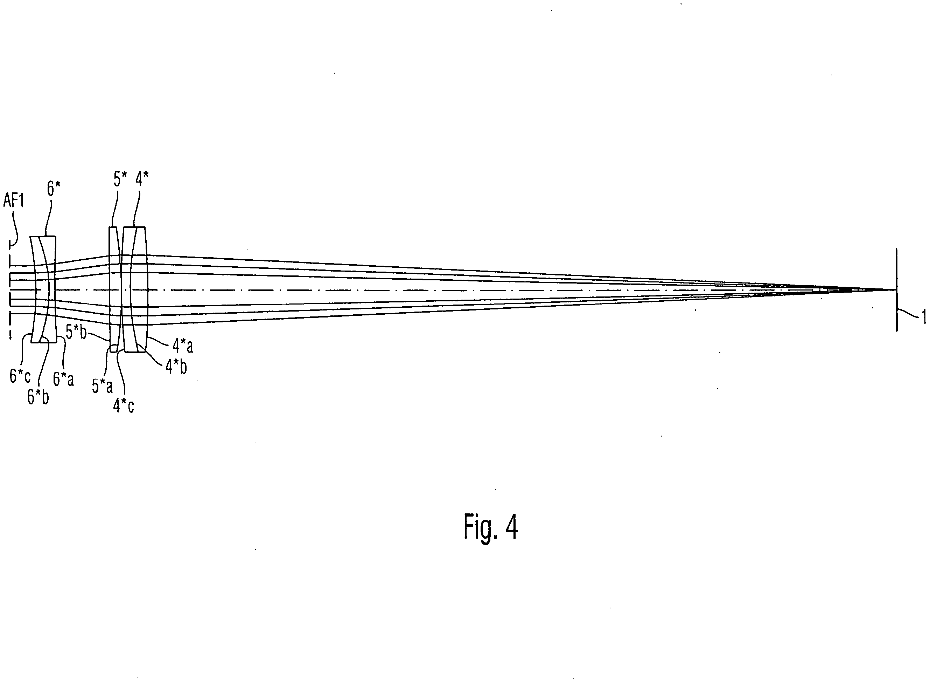

In Figur 1A und 1B bilden die Linsen 4, 5 und 6 ein Tele-Varioskop. Alternativ kann jedoch auch ein Retrofokus-Varioskop verwendet werden. Ein entsprechender Aufbau ist schematisch in Figur 4 gezeigt.

Weiter stellt das Mikroskopiesystem gemäß der bevorzugten ersten Ausführungsform einen Sekundärstrahlengang 24 bereit, welcher die erste Spiegelfläche 3 des ersten Umlenkelements in einem zentralen Bereich durchsetzt. Dieser zentrale Bereich kann vorzugsweise zwischen Strahlquerschnittsflächen der Abbildungsstrahlengänge 2a und 2b liegen. Dies ist insbesondere dann sichergestellt, wenn die optischen Linsen des ersten Teilsystems T1 eine Pupillenabbildung im Bereich der ersten Spiegelfläche bewirken. Hierfür weist die erste Spiegelfläche 3 eine in Figur 1B gezeigte Ausnehmung 25 auf. Alternativ zum Vorsehen einer Ausnehmung ist es jedoch beispielsweise ausreichend, wenn die erste Spiegelfläche 3 zumindest bereichsweise eine Transparenz für Strahlung des Sekundärstrahlengangs 24 aufweist, die größer ist als eine Transparenz für Strahlung der Abbildungsstrahlengänge 2a, 2b. Die Einkopplung des Sekundärstrahlenganges 24 kann alternativ auch auf eine andere Weise erfolgen. Das in Figur 1A gezeigte Mikroskopiesystem weist somit eine 0°-Beleuchtung für ein in der Objektebene 1 anordenbares Objekt auf.

In Figur 1A wird der Sekundärstrahlengang 24 durch eine Beleuchtungsoptik 30 eines Beleuchtungssystems gebildet, wobei das Beleuchtungssystem weiter eine Strahlungsquelle 23 umfaßt. Dieses Beleuchtungssystem ist nicht Teil des Abbildungssystems 26.

Alternativ kann zusätzlich oder anstelle des die Beleuchtungsoptik 30 und die Strahlungsquelle 23 umfassenden Beleuchtungssystems auch ein Infrarot-Beobachtungssystem (nicht gezeigt) mit einer Infrarot-Abbildungsoptik und einer Infrarot-Kamera vorgesehen sein, wobei die Infrarot-Abbildungsoptik den Sekundärstrahlengang 24 bereitstellt. Weiter kann zusätzlich oder anstelle des Beleuchtungssystems auch ein Laser (nicht gezeigt) mit einem Strahlführungssystem (nicht gezeigt), welches den Sekundärstrahlengang 24 bereitstellt, vorgesehen sein. Ein derartiger Laser ermöglicht eine Therapie beispielsweise zur Krebsbehandlung.

Weiter kann ein (in den Figuren nicht gezeigter) Strahlteiler vorgesehen sein, der die Abbildungsstrahlengänge 2a, 2b durch geometrische oder physikalische Strahlteilung trennt. Wenn dieser Strahlteiler zwischen dem ersten Teilsystem T1 und dem zweiten Teilsystem T2 und somit im Bereich der zweiten afokalen Schnittstelle AF2 angeordnet ist, kann hierdurch beispielsweise ein frei schwenkbarer Mitbeobachtertubus mit weitgehend unabhängig einstellbarer Vergrößerung bereitgestellt werden. Ein frei schwenkbarer Mitbeobachtertubus wird ergonomischen Anforderungen eines Benutzers des Mikroskopiesystems am besten gerecht.

In der vorstehend beschriebenen bevorzugten ersten Ausführungsform ist das erste, zweite, dritte und vierte Umlenkelement jeweils ein optischer Spiegel. Alternativ können die Umlenkelemente jedoch beispielsweise auch Prismen mit jeweils wenigstens einer Spiegelfläche sein. Weiter können das erste, zweite, dritte und vierte Umlenkelement wahlweise jeweils separate Spiegelflächen zur Ablenkung der Abbildungsstrahlengänge 2a und 2b aufweisen.

Alternativ kann auf eine Ablenkung der Abbildungsstrahlengänge 2a, 2b jedoch auch ganz oder teilweise verzichtet werden. Auch kann der Abbildungsstrahlengang beispielsweise nur ein, zwei oder dreimal abgelenkt sein.

Hierdurch wird der Aufbau des Mikroskopiesystems jedoch zum Teil deutlich verlängert. Gleichwohl weist das erfindungsgemäße Mikroskopiesystem weiterhin einen kompakteren Aufbau als ein gleich gefaltetes Mikroskopiesystem aus dem Stand der Technik auf. Der Grund ist, dass das zweite Teilsystem T2 des erfindungsgemäßen Mikroskopiesystems bei gleicher Gesamtvergrößerung der Mikroskopiesysteme kompakter ausgebildet ist, als ein entsprechendes zweites Teilsystem des vorbekannten Mikroskopiesystems. Weiter alternativ ist es auch möglich, die Abbildungsstrahlengänge 2a, 2b öfter als viermal abzulenken.

Das Mikroskopiesystem gemäß der bevorzugten ersten Ausführungsform eignet sich besonders gut zur Verwendung als Operationsmikroskop, da das Abbildungssystem 26 eine besonders geringe Bauhöhe und ein besonders geringes Bauvolumen aufweist.

Figur 1B zeigt schematisch eine perspektivische Ansicht, um (im Gegensatz zu der in Figur 1A in eine Ebene entfalteten Anordnung) die tatsächliche räumliche Anordnung wesentlicher Elemente des Abbildungssystems 26 des Mikroskopiesystems gemäß der bevorzugten ersten Ausführungsform zu verdeutlichen. In der Figur 1B ist der besseren Übersichtlichkeit halber nur ein Abbildungsstrahlengang 2a dargestellt. Zudem wurde in Figur 1B auf eine Darstellung des Beleuchtungssystems verzichtet.

Bei einem Mikroskopiesystem, bei dem es wie vorstehend beschrieben möglich ist, eine Abbildungsvergrößerung und/oder einen Arbeitsabstand durch Verlagerung von optischen Linsen einzustellen, ist es nachteilig, daß die aus Anwendersicht äußerst vorteilhafte Variation des Arbeitsabstandes in der Regel mit einer Diskrepanz der Brennweite zum jeweiligen Arbeitsabstand verbunden ist. So ist die Brennweite beispielsweise bei einem Tele-Varioskopsystem deutlich größer als der Arbeitsabstand, wohingegen bei einem Retrofokus-Varioskopsystem die Brennweite deutlich kürzer als der jeweilige Arbeitsabstand ist.

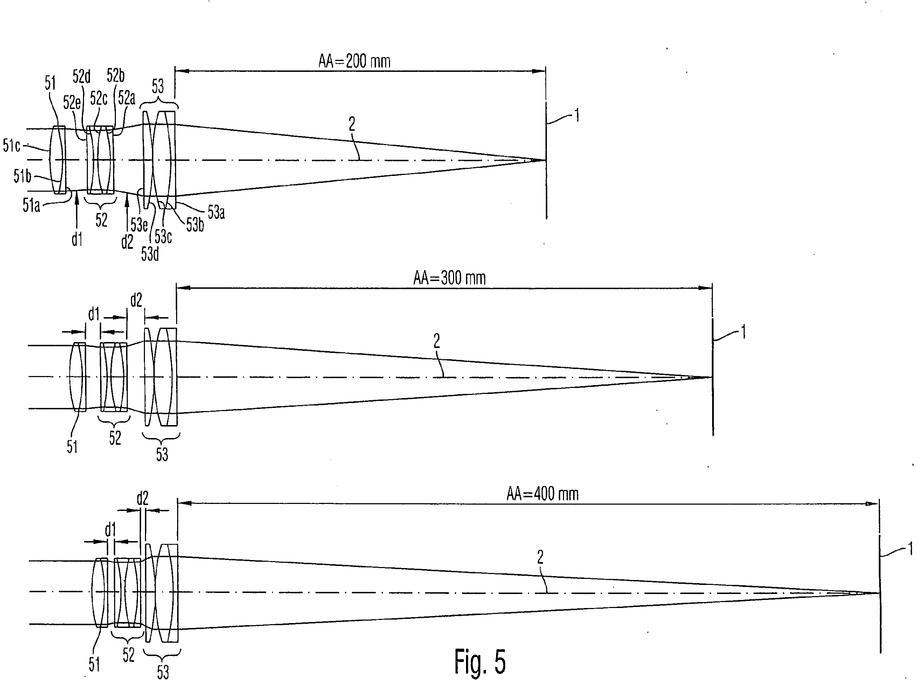

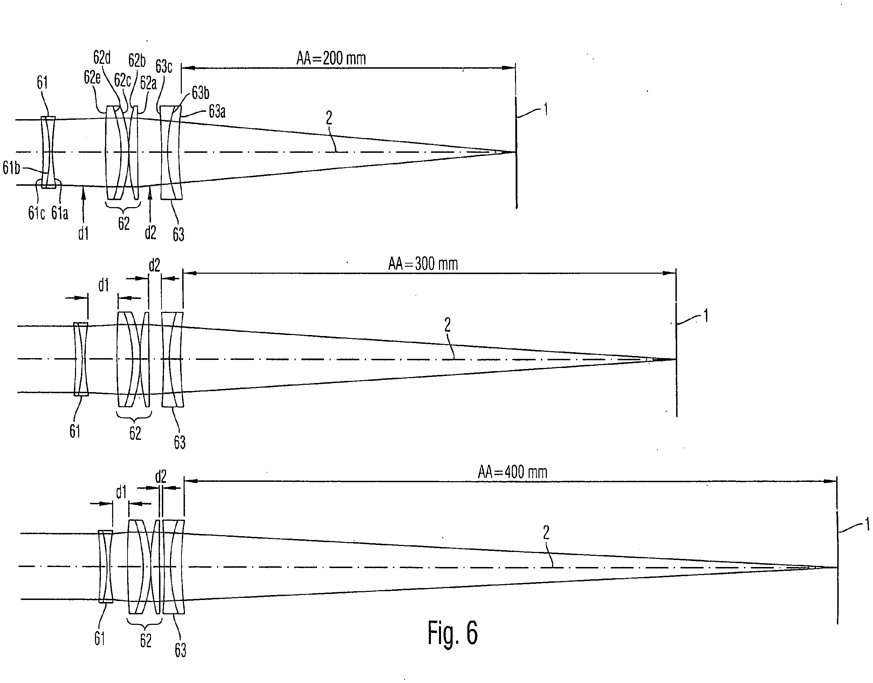

Zur Lösung dieses Problems wird das in den Figuren 5 und 6 gezeigte dreigliedrige Varioskopsystem vorgeschlagen. Die in Figur 5 und 6 gezeigten dreigliedrigen Varioskopsysteme weisen jeweils drei seriell angeordnete optische Baugruppen 51, 52 und 53 bzw. 61, 62 und 63 auf, welche von dem wenigstens einen Abbildungsstrahlengang nacheinander durchsetzt sind.

In den Figuren 5 und 6 wird die erste optische Baugruppe 51 und 61 jeweils durch eine optische Linse gebildet. Weiter wird die zweite optische Baugruppe 52 bzw. 62 jeweils durch zwei optische Linsen gebildet, welche relativ zueinander ortsfest sind.

In Figur 5 wird die dritte optische Baugruppe 53 ebenfalls durch zwei optische Linsen gebildet, die relativ voneinander um einen konstanten Abstand beabstandet sind, wohingegen in Figur 6 die dritte optische Baugruppe 63 lediglich durch eine optische Linse gebildet ist.

Durch wohldefinierte gleichzeitige Änderung von Luftabständen d1 und d2 zwischen den drei optischen Baugruppen 51, 52 und 53 bzw. 61, 62 und 63 wird ein Varioskopsystem mit den Eigenschaften eines festbrennweitigen Hauptobjektives zur Verfügung gestellt, um eine Anpassung der Brennweite an einen Arbeitsabstand AA von einer Objektebene 1 auch nach einer Variation des Arbeitsabstandes sicherzustellen.

Die Systemdaten des in Figur 5 gezeigten Retrofokus-Varioskopsystems lauten wie folgt:

| Fläche | Radius | Dicke | Medium | Freier Durchmesser |
|---|---|---|---|---|
| | [mm] | [mm] | | [mm] |
| 51c | 80,963 | | | 20,0 |
| | | 4,0 | NSSK8 | |
| 5b | -45,484 | | | 20,0 |
| | | 2,0 | NSF6 | |
| 51a | -123,82 | | | 20,0 |
| | | 8,2 ... 1,2 | Luft | |
| 52e | -1524,4 | | | 20,0 |
| | | 3,0 | SF57 | |
| 52d | -40,485 | | | 20,0 |
| | | 2,0 | NPSK53 | |
| 52c | 37,668 | | | 20,0 |
| | | 3,0 | Luft | |
| 52b | -34,879 | | | 20,0 |
| | | 2,0 | NPSK3 | |
| 52a | 172,34 | | | 20,0 |
| | | 7,7 ... 1,7 | Luft | |
| 53e | 209,32 | | | 32,0 |
| | | 4,0 | NPSK53 | |
| 53d | -55,334 | | | 32,0 |
| | | 0,1 | Luft | |
| 53c | 70,408 | | | 32,0 |
| | | 7,0 | NPSK53 | |
| 53b | -47,754 | | | 32,0 |
| | | 3,0 | NSF6 | |
| 53a | -564,00 | | | 32,0 |
| | | 200 ... 400 | | |
| | | Objekt | | |

Geeignete Abstände d1 und d2 zwischen den optischen Baugruppen 51, 52 und 53 des in Figur 5 gezeigten Retrofokus-Varioskopsystems sind in der folgenden Tabelle angegeben:

| AA | d1 | d2 |
|---|---|---|
| [mm] | [mm] | [mm] |
| 200 | 8,16 | 7,74 |
| 300 | 3,51 | 3,56 |
| 400 | 1,18 | 1,72 |

Für das in Figur 6 gezeigte Tele-Varioskopsystem lauten die Systemdaten wie folgt:

| Fläche | Radius | Dicke | Medium | Freier Durchmesser |
|---|---|---|---|---|
| | [mm] | [mm] | | [mm] |
| | | Zoom | | |
| 61c | -119,41 | | | 25,0 |
| | | 3,0 | SF57 | |
| 61b | -69,972 | | | 25,0 |
| | | 2,0 | NBAF52 | |
| 61a | 126,85 | | | 25,0 |
| | | 19,9 ... 5,8 | Luft | |
| 62e | 304,82 | | | 32,0 |
| | | 6,0 | NPSK53 | |
| 62d | -31,227 | | | 32,0 |
| | | 3,0 | SF57 | |
| 62c | -56,307 | | | 32,0 |
| | | 0,1 | Luft | |
| 62b | 66,072 | | | 32,0 |
| | | 4,0 | NPSK53 | |
| 62a | -411,61 | | | 32,0 |
| | | 7,0 ... 1,1 | Luft | |
| 63c | -276,18 | | | 32,0 |
| | | 3,0 | NSSK8 | |
| 63b | 27,297 | | | 32,0 |
| | | 4,0 | NSF6 | |
| 63a | 47,864 | | | 32,0 |
| | | 200 ... 400 | Luft | |
| | | Objekt | | |

Für vorgegebene Arbeitsabstände AA von der Objektebene 1 lauten die Abstände d1 und d2 zwischen den optischen Baugruppen 61, 62 und 63 wie folgt:

| AA | d1 | d2 |
|---|---|---|
| [mm] | [mm] | [mm] |
| 200 | 19,88 | 7,03 |
| 300 | 10,52 | 3,26 |
| 400 | 5,84 | 1,06 |

Insgesamt unterscheidet sich die vorstehend anhand der Figuren 5 und 6 beschriebene Lösung von herkömmlichen Varioskopsystemen dadurch, daß zur Arbeitsabstandsvariation zwei Luftabstände d1 und d2 zwischen den drei optischen Baugruppen 51, 52 und 53 bzw. 61 und 62 und 63 geändert werden, während bei herkömmlichen Varioskopen zur Arbeitsabstandsänderung nur ein Luftabstand verändert werden muß. Die vorstehend beschriebenen Varioskopsysteme mit Festbrennweite haben gegenüber herkömmlichen Varioskopsystemen nach dem bekannten Teleprinzip und Retrofokusprinzip zwar keinen so kompakten Aufbau. Dieser Nachteil kann bei einem gefalteten Aufbau des Mikroskopiesystems als solches jedoch weitgehend ausgeglichen werden und wird durch die erreichten Vorteile der Varioskopsysteme mit Festbrennweite mehr als ausgeglichen. Zusätzlich stellen sie eine bisher nicht offenbarte Problemlösung der Forderung nach einer Aufhebung der bei einem konventionellen Varioskopsystem bestehenden Diskrepanz zwischen Arbeitsabstand und Brennweite bereit.

Hierdurch ist das in den Figuren 5 und 6 gezeigte Varioskopsystem mit Festbrennweite besonders gut für das vorstehend beschriebene Mikroskopiesystem gemäß der ersten bevorzugten Ausführungsform der vorliegenden Erfindung geeignet.

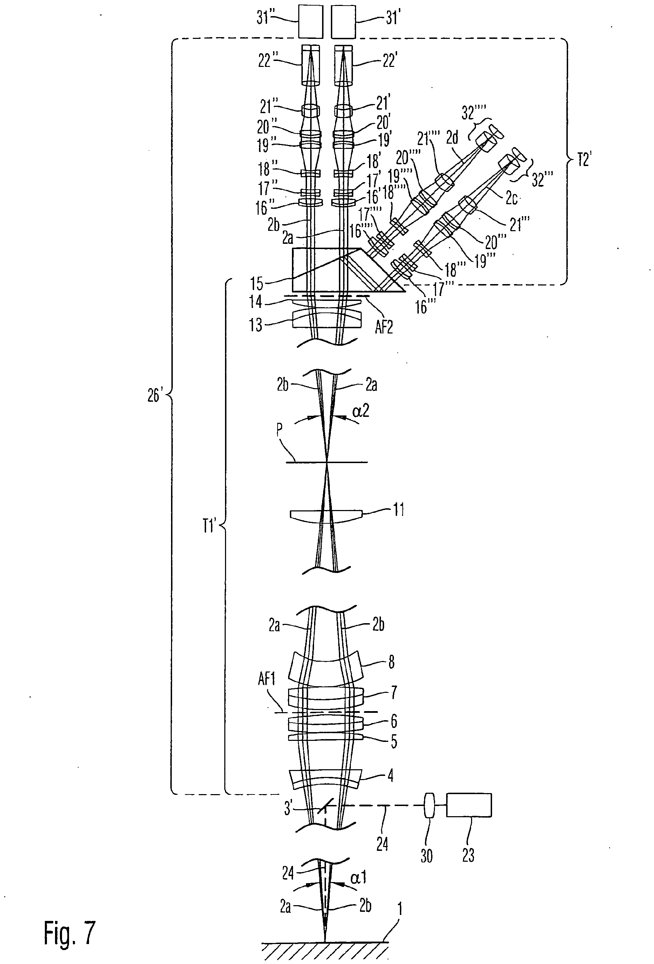

Im Folgenden wird unter Bezugnahme auf Figur 7 eine zweite Ausführungsform eines Mikroskopiesystems gemäß der vorliegenden Erfindung beschrieben. Dabei zeigt Figur 7 schematisch einen Strahlengang durch eine in eine Ebene entfaltete Anordnung wesentlicher Elemente eines Abbildungssystems 26' des Mikroskopiesystems. Der Aufbau des Mikroskopiesystems gemäß der zweiten Ausführungsform entspricht in wesentlichen Teilen dem Aufbau des Mikrokopiesystems gemäß der vorstehend ausführlich beschriebenen ersten Ausführungsform. Folglich werden nur Unterschiede zwischen der ersten und zweiten Ausführungsform detailliert erläutert.

Auch das Mikroskopiesystem gemäß der zweiten Ausführungsform weist ein Abbildungssystem 26' auf, um ein in einer Objektebene 1 anordenbares Objekt (nicht gezeigt) abzubilden. Dabei stellt das Abbildungssystem 26' zwei Paar von Abbildungsstrahlengängen 2a, 2b und 2c, 2d bereit. Das Abbildungssystem 26' setzt sich (wie in der vorstehend beschriebenen ersten Ausführungsform) aus einem ersten Teilsystem T1' mit mehreren optischen Linsen 4-8, 11, in welchen die Abbildungsstrahlengänge 2a-2d gemeinsam geführt werden, und einem zweiten Teilsystem T2' mit mehreren optischen Linsen 16'-21', 22', 16"-21", 22", 16"' - 21"', 22'" und 16""-21"", 22"", in denen die Abbildungsstrahlengänge 2a-2d getrennt geführt werden, zusammen. Auch hier sind Linsen des ersten und zweiten Teilsystems T1', T2' zur Anpassung eines Arbeitsabstandes bzw. zur Änderung der Abbildungsvergrößerung relativ zueinander verlagerbar. Auf eine nähere Beschreibung dieser Elemente wird verzichtet.

Wesentlich an der in Figur 7 gezeigten zweiten Ausführungsform ist, daß keine Umlenkelemente zum Ablenken der Abbildungsstrahlengänge 2a-2d vorgesehen sind. Lediglich die Abbildungsstrahlengänge 2c und 2d werden in einem frei verdrehbaren Strahlteiler 15 gefaltet, um sie von den Abbildungsstrahlengängen 2a und 2b zu trennen und ergonomische Anpassungen der Abbildungsstrahlengänge zu erlauben.

Figur 7 zeigt zusätzlich zwei Digitalkameras 31' und 31", welche aus in den Abbildungsstrahlengängen 2a und 2b geführter Strahlung Bilddaten erzeugen. Weiter sind zwei Okularoptiken 32"', 32"" für eine direkte visuelle Beobachtung von in den Abbildungsstrahlengängen 2c und 2d geführter Strahlung durch einen Benutzer vorgesehen.

Die Einkopplung der Null-Grad Beleuchtung erfolgt in der zweiten Ausführungsform über einen Beleuchtungsspiegel, der in einer Pupillenebene der Abbildungsstrahlengänge 2a-2d zwischen Strahlquerschnittsflächen von in den Abbildungsstrahlengängen 2a-2d geführter Strahlung angeordnet ist.

Auch das Mikroskopiesystem gemäß der zweiten Ausführungsform kann mit einem Varioskopsystem mit Festbrennweite kombiniert werden, wie es in den Figuren 5 und 6 gezeigt ist.

Zusammenfassend wird ein Mikroskopiesystem zur Abbildung eines in einer Objektebene des Mikroskopiesystems anordenbaren Objekts vorgeschlagen, welches aufgrund einer verkleinerten Abbildung der Objektebene in ein Zwischenbild und/oder einem gegenüber dem Stereowinkel in der Objektebene vergrößerten Stereowinkel an dem Zwischenbild einen für eine zu erzielende Gesamtvergrößerung besonders kompakten Aufbau aufweist.

## Patentansprüche

1. Mikroskopiesystem zur Abbildung eines in einer Objektebene (1) des Mikroskopiesystems anordenbaren Objekts, wobei das Mikroskopiesystem umfaßt:
ein Abbildungssystem (26) zur Bereitstellung wenigstens eines Paars von Abbildungsstrahlengängen (2a, 2b, 2c, 2d),
welche in der Objektebene (1) einen Stereowinkel (α1) einschließen,
wobei das Abbildungssystem (26) ein erstes Teilsystem (T1) aufweist, das eine Mehrzahl von optischen Linsen (4-8, 11, 13, 14) umfaßt, welche von beiden Abbildungsstrahlengängen (2a, 2b, 2c, 2d) des wenigstens einen Paars von Abbildungsstrahlengängen (2a-2d) gemeinsam durchsetzt sind,
und
wobei das Abbildungssystem (26) ein zweites Teilsystem (T2) aufweist, das eine Mehrzahl von optischen Linsen (16'-21', 16"-21", 16"'-21"', 16""-21"") umfaßt, welche jeweils von lediglich einem Abbildungsstrahlengang (2a, 2b, 2c, 2d) des wenigstens einen Paars von Abbildungsstrahlengängen (2a, 2b, 2c, 2d) durchsetzt sind,
**dadurch gekennzeichnet, daß**
wenigstens zwei Linsen (4, 5, 6) des ersten Teilsystems (T1) und wenigstens zwei Linsen (16'-19', 16"-19", 16"'-19"', 16""-19"") des zweiten Teilsystems (T2) entlang eines gemeinsamen Abbildungsstrahlengangs (2a-2d) relativ zueinander verlagerbar sind, um jeweils eine Vergrößerung der Abbildung des in der Objektebene (1) anordenbaren Objektes zu ändern.

2. Mikroskopiesystem nach Anspruch 1, wobei das Mikroskopiesystem weiter ein Beleuchtungssystem (23, 30) mit einem Beleuchtungsstrahlengang (24) zur Beleuchtung der Objektebene (1) umfaßt.

3. Mikroskopiesystem nach einem der vorangegangenen Ansprüche, wobei das Mikroskopiesystem ein Stereomikroskop und bevorzugt ein Operationsmikroskop ist.

4. Mikroskopiesystem nach einem der vorangegangenen Ansprüche, wobei das Abbildungssystem (26) eine erste, zweite, dritte und vierte Spiegelfläche (3, 9, 10, 12) zur Ablenkung des wenigstens einen Abbildungsstrahlengangs (2a-2d) aufweist; und
wobei der wenigstens eine Abbildungsstrahlengang (2a-2d) nacheinander an der ersten Spiegelfläche (3), der zweiten Spiegelfläche (9), der dritten Spiegelfläche (10) und der vierten Spiegelfläche (12) reflektiert ist.

5. Mikroskopiesystem nach Anspruch 4, wobei die erste Spiegelfläche (3) und die vierte Spiegelfläche (12) relativ zueinander einen Winkel von zwischen 80° und 100° und bevorzugt 90° einschließen, sowie die zweite Spiegelfläche (9) und die dritte Spiegelfläche (10) relativ zueinander einen Winkel von zwischen 80° und 100° und bevorzugt 90° einschließen, und die dritte Spiegelfläche (10) und die vierte Spiegelfläche (9) relativ zueinander einen Winkel von zwischen 50° und 70° und bevorzugt 60° einschließen.

6. Mikroskopiesystem nach Anspruch 4 oder 5, wobei die zweite und/oder dritte und/oder vierte Spiegelfläche (9, 10, 12) zwischen optischen Linsen (4-8, 11, 13, 14) des ersten Teilsystems (T1) angeordnet ist.

7. Mikroskopiesystem nach einem der vorangegangenen Ansprüche, wobei das erste Teilsystem (T1) drei nacheinander von beiden Abbildungsstrahlengängen (2a, 2b, 2c, 2d) des wenigstens einen Paars von Abbildungsstrahlengängen (2a-2d) gemeinsam durchsetzte optische Baugruppen (51, 52, 53) umfasst, welche optischen Baugruppen (51, 52, 53) ein Retrofokus-Varioskopsystems mit folgenden Systemdaten bilden:
| Fläche | Radius | Dicke | Medium | Freier Durchmesser |
|---|---|---|---|---|
| | [mm] | [mm] | | [mm] |
| 51c | 80,963 | | | 20,0 |
| | | 4,0 | NSSK8 | |
| 5b | -45,484 | | | 20,0 |
| | | 2,0 | NSF6 | |
| 51a | -123,82 | | | 20,0 |
| | | d1 = 8,2 ... 1,2 | Luft | |
| 52e | -1524,4 | | | 20,0 |
| | | 3,0 | SF57 | |
| 52d | -40,485 | | | 20,0 |
| | | 2,0 | NPSK53 | |
| 52c | 37,668 | | | 20,0 |
| | | 3,0 | Luft | |
| 52b | -34,879 | | | 20,0 |
| | | 2,0 | NPSK3 | |
| 52a | 172,34 | | | 20,0 |
| | | d2 = 7,7 ... 1,7 | Luft | |
| 53e | 209,32 | | | 32,0 |
| | | 4,0 | NPSK53 | |
| 53d | -55,334 | | | 32,0 |
| | | 0,1 | Luft | |
| 53c | 70,408 | | | 32,0 |
| | | 7,0 | NPSK53 | |
| 53b | -47,754 | | | 32,0 |
| | | 3,0 | NSF6 | |
| 53a | -564,00 | | | 32,0 |
| | | 200 ... 400 | | |
| | | Objekt | | |

8. Mikroskopiesystem nach Anspruch 7, wobei die Abstände d1 und d2 zwischen den optischen Baugruppen (51, 52, 53) des Retrofokus-Varioskopsystems für bestimmte Arbeitsabstände AA wie folgt ausgewählt sind:
| AA | d1 | d2 |
|---|---|---|
| [mm] | [mm] | [mm] |
| 200 | 8,16 | 7,74 |
| 300 | 3,51 | 3,56 |
| 400 | 1,18 | 1,72 |

9. Mikroskopiesystem nach einem der vorangegangenen Ansprüche, wobei das erste Teilsystem (T1) drei nacheinander von beiden Abbildungsstrahlengängen (2a, 2b, 2c, 2d) des wenigstens einen Paars von Abbildungsstrahlengängen (2a-2d) gemeinsam durchsetzte optische Baugruppen (61, 62, 63) umfasst, welche optischen Baugruppen (61, 62, 63) ein Tele-Varioskopsystem mit folgenden Systemdaten bilden:
| Fläche | Radius | Dicke | Medium | Freier Durchmesser |
|---|---|---|---|---|
| | [mm] | [mm] | | [mm] |
| | | Zoom | | |
| 61c | -119,41 | | | 25,0 |
| | | 3,0 | SF57 | |
| 61b | -69,972 | | | 25,0 |
| | | 2,0 | NBAF52 | |
| 61a | 126,85 | | | 25,0 |
| | | 19,9 ... 5,8 | Luft | |
| 62e | 304,82 | | | 32,0 |
| | | 6,0 | NPSK53 | |
| 62d | -31,227 | | | 32,0 |
| | | 3,0 | SF57 | |
| 62c | -56,307 | | | 32,0 |
| | | 0,1 | Luft | |
| 62b | 66,072 | | | 32,0 |
| | | 4,0 | NPSK53 | |
| 62a | -411,61 | | | 32,0 |
| | | 7,0 ... 1,1 | Luft | |
| 63c | -276,18 | | | 32,0 |
| | | 3,0 | NSSK8 | |
| 63b | 27,297 | | | 32,0 |
| | | 4,0 | NSF6 | |
| 63a | 47,864 | | | 32,0 |
| | | 200 ... 400 | Luft | |
| | | Objekt | | |

10. Mikroskopiesystem nach Anspruch 9, wobei die Abstände d1 und d2 zwischen den optischen Baugruppen (61, 62, 63) des Retrofokus-Varioskopsystems für bestimmte Arbeitsabstände AA wie folgt ausgewählt sind:
| AA | d1 | d2 |
|---|---|---|
| [mm] | [mm] | [mm] |
| 200 | 19,88 | 7,03 |
| 300 | 10,52 | 3,26 |
| 400 | 5,84 | 1,06 |
